# EUROPÄISCHE PATENTSCHRIFT

(11) **EP 3 826 574 B1**
(45) Veröffentlichungstag und Bekanntmachung des Hinweises auf die Patenterteilung: **17.01.2024**
(21) Anmeldenummer: 19769423.5
(22) Anmeldetag: 11.09.2019
(51) Int. Cl.: A61C 5/66

(54) **MISCHKAPSEL, INSBESONDERE FÜR DEN DENTALBEREICH**
MIXING CAPSULE, IN PARTICULAR FOR THE FIELD OF DENTISTRY
CAPSULE DE MÉLANGE, EN PARTICULIER POUR LA DENTISTERIE

(30) Priorität: 12.09.2018 DE 102018122290
(43) Veröffentlichungstag der Anmeldung: 02.06.2021
(73) Patentinhaber: Kulzer GmbH, 63450 Hanau (DE)
(72) Erfinder: KEMENY, Andrea, 61381 Friedrichsdorf (DE)
(74) Vertreter: Bendele, Tanja
(86) Internationale Anmeldenummer: PCT/EP2019/074165
(87) Internationale Veröffentlichungsnummer: WO 2020/053246

(56) Entgegenhaltungen:
- EP-A1- 2 039 317
- US-A- 2 527 991
- US-A- 3 917 062
- US-A- 4 175 658

## Beschreibung

Die vorliegende Erfindung betrifft eine Mischkapsel, insbesondere für den Dentalbereich.

Ebenfalls Gegenstand der Erfindung ist ein Verfahren nach Anspruch 14 sowie die Verwendung der erfindungsgemäßen Mischkapsel zum Mischen und Lagern nach Anspruch 16 von Zwei-Komponenten Zusammensetzungen, vorzugsweise von dentalen 2K-Zusammensetzungen.

Aus dem Stand der Technik ist eine Vielzahl an Mischkapseln im Dentalbereich bekannt, die zum Lagern und Mischen von Zwei-Komponentenzusammensetzungen geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben.

Nachteilig an den bekannten Mischkapseln ist, dass diese in der Regel nicht dafür ausgelegt sind, in einen PLT-Applikator eingespannt zu werden, sodass der Inhalt der Mischkapsel mit einer Kanüle eines PLT-Applikators heraus beförderbar ist. Eine Mischkapsel mit zwei Kammern ist aus US 2 527 991 A1 bekannt.

Aufgabe der Erfindung war es eine Mischkapsel zu entwickeln, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Ferner bestand die Aufgabe die Mischkapsel so zu dimensionieren, dass diese in gängige PLT-Applikatoren, wie sie in Zahnarztpraxen vorhanden sind, einsetzbar ist.

Die Erfindung wird durch die unabhängigen Ansprüche definiert.

Die Aufgabe der vorliegenden Erfindung wird gelöst durch eine Mischkapsel umfassend eine erste Kammer zur Aufnahme einer Zusammensetzung A und eine zweite Kammer zur Aufnahme einer Zusammensetzung B, wobei die erste Kammer und die zweite Kammer rotierbar um die Längsachse der Mischkapsel angeordnet sind, wobei die erste Kammer eine erste Öffnung umfasst, wobei die zweite Kammer eine zweite Öffnung umfasst, wobei die erste Öffnung und die zweite Öffnung senkrecht zur Längsachse und zueinander planparallel und senkrecht zur Längsachse angeordnet sind, senkrecht auf der Längsachse stehen, bevorzugt senkrecht von der Längsachse beabstandet angeordnet sind, wobei in einer Lagerposition die erste Öffnung und die zweite Öffnung inkongruent zueinander angeordnet sind, wobei in einer Handhabungsposition die erste Öffnung und die zweite Öffnung kongruent zueinander angeordnet sind, und insbesondere wobei die Mischkapsel ein erstes Gehäuse und ein zweites Gehäuse umfasst, und das erste Gehäuse einen ersten Rohrabschnitt und einen ersten spitzzulaufenden Sockel umfasst, wobei das zweite Gehäuse einen zweiten Rohrabschnitt und einen zweiten spitzzulaufenden Sockel umfasst, wobei innerhalb des ersten Rohrabschnitts die erste Kammer angeordnet ist, wobei innerhalb des zweiten Rohrabschnitts die zweite Kammer angeordnet ist, wobei das erste Gehäuse und das zweite Gehäuse um die Längsachse drehbar zueinander gelagert sind, welche parallel zum ersten Rohrabschnitt und dem zweiten Rohrabschnitt angeordnet ist und, wobei die Längsachse zwischen dem ersten Rohrabschnitt und dem zweiten Rohrabschnitt und zwischen oder in dem ersten spitzzulaufenden Sockel und in dem zweiten spitzzulaufenden Sockel angeordnet ist, wobei die spitzzulaufenden Sockel des ersten und zweiten Gehäuses dazu ausgebildet sind, durch Drehung um die Längsachse eine einrastbare griffartige Ausformung zu bilden, wobei die erste Kammer an ihrer der zweiten Kammer abgewandten Seite eine erste Anschlussgeometrie aufweist, die dazu ausgebildet ist, eine Düse mit Kolbenabschnitt mit zentral gelegener Kanüle und Mittel zum Durchstoßen einer Membran der gemeinsamen Mischkammer aufzunehmen, wobei die Kanüle an ihrer der gemeinsamen Mischkammer zugewandten Seite kommunizierend mit der gemeinsamen Mischkammer und an ihrer der Mischkammer abgewandten Seite kommunizierend mit der Umgebung ausgebildet ist.

Besonders bevorzugt sind die erste Öffnung und die zweite Öffnung gleich beabstandet und senkrecht zur Längsachse angeordnet, um in der Handhabungsposition kongruent zueinander angeordnet zu sein. Die Längsachse der Mischkapsel ist vorzugsweise parallel zur Längsachse bzw. Mittelachse der ersten Kammer und parallel zur Längsachse bzw. Mittelachse der zweiten Kammer angeordnet, wobei die Längsachsen bzw. Mittelachsen der Kammern vorzugsweise gleich von der Längsachse der Mischkapsel beabstandet sind und in der Handhabungsposition eine gemeinsame Längsachse bzw. Mittelachse ausbilden, die insbesondere von der Längsachse der Mischkapsel beabstandet ist. Die gemeinsame Längsachse bzw. Mittelachse bildet die Längsachse bzw. Mittelachse der gemeinsamen Mischkammer.

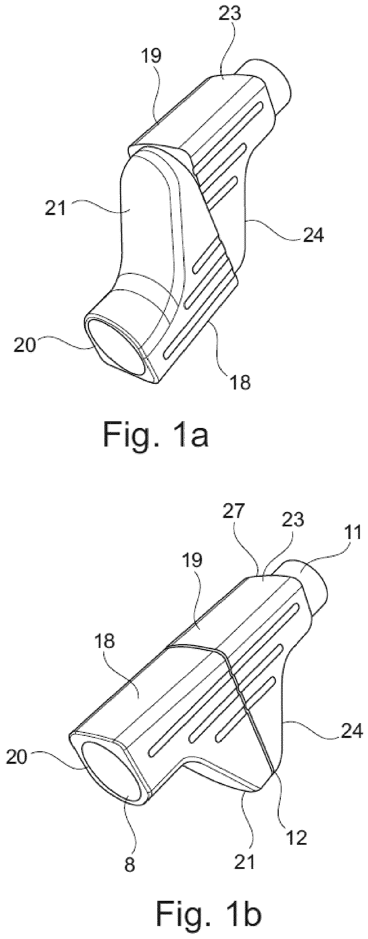

Die Längsachse der Mischkapsel liegt in der Lagerposition, s. Fig. 1a der ersten und zweiten Kammer zwischen den beiden Kammern und, ist insbesondere senkrecht zur ersten und zweiten planparallelen Öffnung angeordnet, und in der Handhabungsposition liegt die Längsachse der Mischkapsel seitlich und parallel versetzt zur gemeinsamen Längsachse bzw. Mittelachse der gemeinsamen Mischkapsel, wobei insbesondere die erste und zweite Öffnung kongruent aufeinander zu liegen kommen. In der Handhabungsposition dichten die erste und zweite Öffnung in der kongruenten Position die gemeinsame Mischkammer nach außen ab. Vorteilhaft kann die erste und/oder zweite Öffnung mit einer Dichtung versehen sein, wie beispielsweise einem O-Ring oder einer flachen Dichtung aus Gummi oder Silicon. Die Längsachse der Mischkapsel ist eine Drehachse für das erste und zweite Gehäuse, wobei die Längsachse parallel zur ersten Kammer und parallel zur zweiten Kammer, insbesondere parallel zum ersten und zweiten Rohrabschnitt, liegt, und, wobei die Längsachse der Mischkapsel zwischen der ersten Kammer des ersten Gehäuses, insbesondere dem ersten Rohrabschnitt, und einer zweiten Ausformung am äußeren Umfang des zweiten Gehäuses liegt, insbesondere ist die zweite Ausformung ein Sockel, wobei die Längsachse der Mischkapsel zwischen der zweiten Kammer des zweiten Gehäuses und einer ersten Ausformung am äußeren Umfang des ersten Gehäuses angeordnet ist, insbesondere ist die erste Ausformung ein Sockel.

Zugleich ist die Längsachse, insbesondere als Drehachse, zwischen der ersten Kammer und der ersten Ausformung als auch zwischen der zweiten Kammer und der zweiten Ausformung angeordnet, wobei die Längsachse der Mischkapsel parallel zu den Längsachsen der Kammern verläuft insbesondere sowohl in der Lager- als auch in der Handhabungsposition.

Gegenüber dem Stand der Technik hat die erfindungsgemäße Mischkapsel dabei den Vorteil, dass die drei Funktionen Lagern, Mischen und Anwenden in ein- und demselben Behältnis stattfinden können. Durch ein Drehen der ersten Kammer und/oder zweiten Kammer um die Längsachse der Mischkapsel kann die Mischkapsel von einer Lagerposition in eine Handhabungsposition überführt werden.

Dabei ist in einer Ausführungsform die erste Kammer ein erstes Lumen in einem ersten Rohrabschnitt der Mischkapsel. Die zweite Kammer ist in einer Ausführungsform ein zweites Lumen in einem zweiten Rohrabschnitt der Mischkapsel. Die erste Kammer ist initial verschlossen durch mindestens eine Verschlussfolie an der der zweiten Kammer abgewandten Seite des Rohrabschnitts. Die erste Kammer ist vorzugsweise initial verschlossen durch jeweils eine Verschlussfolie an jeder Seite des Rohrabschnitts. Die zweite Kammer ist initial verschlossen durch eine Verschlussfolie an der der ersten Kammer zugewandten Seite und durch einen Kolben auf der von der ersten Kammer abgewandten Seite. Die Verschlussfolien lassen sich leicht durchstoßen, sodass Öffnungen der Kammern entstehen.

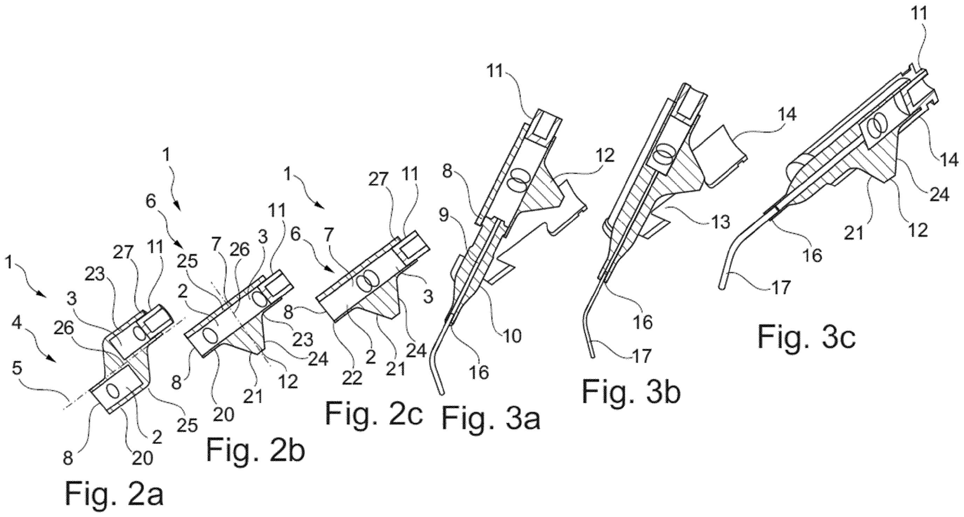

Die erste Öffnung der ersten Kammer liegt an dem Ende des ersten Rohrabschnitts, welches der zweiten Kammer zugewandt ist (siehe Fig. 2a Referenznummer 25). Die zweite Öffnung der zweiten Kammer liegt an dem Ende des zweiten Rohrabschnitts, welches der ersten Kammer zugewandt ist (siehe Fig. 2a Referenznummer 26). In der Lagerposition liegen die erste und die zweite Öffnung in annähernd einer Ebene, welche senkrecht zur Längsachse der Mischkapsel verläuft, wobei die erste und die zweite Öffnung nicht deckungsgleich übereinander fallen (siehe Fig. 2a Referenznummern 25 und 26). Liegen in der Lagerposition die Längsachse der Mischkapsel sowie die erste Längs- bzw. Mittelachse der ersten Kammer und die zweite Längs- bzw. Mittelachse der zweiten Kammer in einer planaren Ebene und die Längs- bzw. Mittelachsen der Kammern auf gegenüberliegenden Seiten der Längsachse der Mischkapsel in der Ebene, so kommen durch eine Drehung der ersten Kammer oder zweiten Kammer um die Längsachse der Mischkapsel um im Wesentlichen 180 Grad die erste und zweite Öffnung deckungsgleich übereinander, was der Handhabungsposition entspricht. Erste und zweite Öffnung kommunizieren miteinander und die erste und zweite Kammer bilden einen gemeinsamen Mischraum in den beiden Rohrabschnitten.

Eine Drehung um im Wesentlichen 180 Grad ist erforderlich, wenn der erste und der zweite Rohrabschnitt in ihrer Lagerposition um im Wesentlichen 180 Grad winkelbeabstandet sind. Je nach relativer Stellung des ersten und zweiten Rohrabschnitts im Lagerzustand zueinander, kann ein anderer Winkel zwischen 0 und 360 Grad, insbesondere 15 bis 345 Grad, für die Drehung aus der Lagerposition in die Handhabungsposition erforderlich sein. In der Lagerposition liegen die Öffnungen der ersten und zweiten Kammer vorzugsweise in einer Alternative nicht übereinander, sondern nur in der Handhabungsposition.

In einer weiteren Ausführungsform ist die erste Kammer eine erste Halbkugel und die zweite Kammer eine zweite Halbkugel. In einer weiteren Ausführungsform ist die erste Kammer ein Teil eines ersten Ellipsoids und die zweite Kammer ein Teil eines zweiten Ellipsoids.

Die Längsachse der Mischkapsel ist bei symmetrischer Bauweise der Mischkapsel die Achse, welche durch den Massenschwerpunkt und/oder durch den Punktsymmetriepunkt der Mischkapsel verläuft (siehe Fig. 2a Referenznummer 5). Die Mischkapsel weist zwei getrennte Gehäuse auf, welche rotierbar zueinander um die Längsachse gelagert sind. Jedes Gehäuse umfasst einen Rohrabschnitt und einen spitzzulaufenden Sockel (siehe Fig. 1a). Dabei verläuft die Längsachse durch die beiden spitzzulaufenden Sockel, insbesondere durch einen Bereich des Sockels, der im Bereich des Fußes des Sockels liegt. Die Sockel liegen vorzugsweise in der initialen Lagerposition um im Wesentlichen 180 Grad zueinander verdreht vor, und parallel zu den beiden Rohrabschnitten, welche planparallel versetzt in der initialen Lagerposition angeordnet sind.

Kongruenz bedeutet in der Geometrie die Deckungsgleichheit von Punktmengen. Kongruente Stellung von erster Öffnung und zweiter Öffnung bedeutet demnach, dass die erste Öffnung und zweite Öffnung im Wesentlichen deckungsgleich übereinanderliegen.

Die erfindungsgemäße Mischkapsel mit Kapselgehäuse weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gemeinsame Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³.

In einer weiteren Ausführungsform ist vorgesehen, dass die erste Öffnung der ersten Kammer und die zweite Öffnung der zweiten Kammer um die Längsachse der Mischkapsel rotierbar und im Verhältnis zueinander planparallel angeordnet sind.

Dadurch kann in vorteilhafter Weise durch einen bloßen Handgriff (eine Drehung) die Mischkapsel von einer Lagerposition in eine Handhabungsposition überführt werden.

Die erste Öffnung der ersten Kammer im ersten Rohrabschnitt des ersten Gehäuses und die zweite Öffnung der zweiten Kammer des zweiten Rohrabschnitts des zweiten Gehäuses sind einander zugewandt und liegen annähernd in einer Ebene, welche senkrecht zur Längsachse angeordnet ist. Da die erste Kammer und die zweite Kammer rotierbar um die Längsachse der Mischkapsel angeordnet sind, sind somit auch die erste Öffnung der ersten Kammer und die zweite Öffnung der zweiten Kammer um die Längsachse der Mischkapsel rotierbar. Bei Inkongruenz von erster und zweiter Öffnung liegt eine Lagerposition vor, bei der die Öffnungen auch noch durch eine Verschlussfolie verschlossen sind. Bei Kongruenz von erster und zweiter Öffnung liegt eine Handhabungsposition vor.

In einer Ausführungsform sind in der Lagerposition eine erste Mittelachse der ersten Kammer und eine zweite Mittelachse der zweiten Kammer längs der Längsachse der Mischkapsel parallel und versetzt zueinander angeordnet. In einer bevorzugten Lagerposition liegen die erste Mittelachse der ersten Kammer und die zweite Mittelachse der zweiten Kammer sowie die Längsachse der Mischkapsel in einer planaren Ebene. In einer weiteren Ausführungsform liegen in der Lagerposition die erste Mittelachse der ersten Kammer und die zweite Mittelachse der zweiten Kammer und die Längsachse der Mischkapsel nicht in einer planaren Ebene.

In der Lagerposition sind die erste Öffnung der ersten Kammer und die zweite Öffnung der zweiten Kammer inkongruent und planparallel zueinander angeordnet, wobei die erste Mittelachse der ersten Kammer und die zweite Mittelachse der zweiten Kammer nicht koaxial verlaufen. In der Handhabungsposition sind die erste Öffnung der ersten Kammer und die zweite Öffnung der zweiten Kammer kongruent zueinander und einander kommunizierend sowie vollständig einander abdichtend angeordnet, wobei die erste Mittelachse der ersten Kammer und die zweite Mittelachse der zweiten Kammer koaxial verlaufen.

Im Falle, dass die erste Kammer in einem ersten Rohrabschnitt und die zweite Kammer in einem zweiten Rohrabschnitt angeordnet ist, sind die erste Mittelachse der ersten Kammer und die zweite Mittelachse der zweiten Kammer in der Lagerposition parallel zur Längsachse der Mischkapsel und planparallel zueinander angeordnet, wobei die erste Mittelachse der ersten Kammer und die zweite Mittelachse der zweiten Kammer sowie die Längsachse der Mischkapsel in einer planaren Ebene liegen (siehe (Fig. 2a). Somit ist in dieser Ausführungsform nur ein Handgriff, nämlich eine Drehung um im Wesentlichen 180 Grad um die Längsachse der Mischkapsel, erforderlich, um die Mischkapsel von ihrer Lagerposition in ihre Handhabungsposition zu überführen.

Das erste Gehäuse umfassend den ersten Rohrabschnitt und die erste Kammer weist am äußeren Umfang des Gehäuses im Bereich der ersten Öffnung, insbesondere teilweise oder über die gesamte Länge des Gehäuses eine erste massive Ausformung am äußeren Umfang des Gehäuses auf, welche in der Lagerposition die zweite Öffnung der zweiten Kammer im zweiten Gehäuse verschließt. Diese Ausformung weist vorzugsweise eine planparallele Fläche auf, die ausreichend ist, die zweite Öffnung der zweiten Kammer in der Lagerposition zu verschließen, vorzugsweise dicht zu verschließen. Das zweite Gehäuse umfasst den zweiten Rohrabschnitt und die zweite Kammer, wobei das zweite Gehäuse am äußeren Umfang im Bereich der zweiten Öffnung, insbesondere teilweise oder die gesamte Länge des Gehäuses eine zweite massive Ausformung aufweist, welche in der Lagerposition die erste Öffnung der ersten Kammer verschließt.

Diese Ausformung weist vorzugsweise eine planparallele Fläche auf, die ausreichend ist, die erste Öffnung der ersten Kammer in der Lagerposition zu verschließen, vorzugsweise dicht zu verschließen.

Die jeweilige Ausformung kann vorzugsweise in Form eines Sockels, insbesondere als spitz zulaufender Sockel, mit einer planparallelen Fläche ausgebildet sein, die jeweils geeignet ist, die erste und die zweite Öffnung dicht zu verschließen.

In der Handhabungsposition bilden die erste massive Ausformung des ersten Gehäuses und die zweite massive Ausformung des zweiten Gehäuses eine gemeinsame Struktur, die in einer Ausführungsform einem aus zwei spitzzulaufenden Sockeln gebildetem Prisma mit dreieckigem Querschnitt entspricht, welche in die Halterung eines Applikators positioniert werden kann.

Der erste Rohrabschnitt weist eine erste Mittelachse auf. Der zweite Rohrabschnitt weist eine zweite Mittelachse auf. In der Lagerposition liegen in einer Ausführungsform die erste Mittelachse des ersten Rohrabschnitts und die zweite Mittelachse des zweiten Rohrabschnitts sowie die Längsachse der Mischkapsel in einer planaren Ebene. In einer weiteren Ausführungsform bilden in der Lagerposition die erste Mittelachse des ersten Rohrabschnitts und die zweite Mittelachse des zweiten Rohrabschnitts bezüglich der Längsachse der Mischkapsel als Scheitelpunkt einen Winkel von 5 bis 180 Grad. In der Handhabungsposition bilden die erste Mittelachse des ersten Rohrabschnitts und die zweite Mittelachse des zweiten Rohrabschnitts bezüglich der Längsachse der Mischkapsel als Scheitelpunkt einen Winkel von annähernd 0 Grad.

In einer Ausführungsform sind die erste Mittelachse der ersten Kammer und die erste Mittelachse des ersten Rohrabschnitts sowie die zweite Mittelachse der zweiten Kammer und die zweite Mittelachse des zweiten Rohrabschnitts zueinander kongruent. In einer weiteren Ausführungsform sind die erste Mittelachse der ersten Kammer und die erste Mittelachse des ersten Rohrabschnitts sowie die zweite Mittelachse der zweiten Kammer und die zweite Mittelachse des zweiten Rohrabschnitts zueinander inkongruent.

In einer weiteren Ausführungsform ist vorgesehen, dass die Längsachse der Mischkapsel eine Drehachse ist, um welche die erste Kammer und/oder die zweite Kammer der Mischkapsel, insbesondere ausgehend von der Lagerposition der Mischkapsel, um im Wesentlichen 180 Grad drehbar, synonym rotierbar, gelagert ist, wobei durch eine Drehung der ersten Kammer und/oder der zweiten Kammer um im Wesentlichen 180 Grad um die Längsachse der Mischkapsel, die Mischkapsel in die Handhabungsposition überführbar ist, wobei in der Handhabungsposition die erste Mittelachse der ersten Kammer und die zweite Mittelachse der zweiten Kammer koaxial in einer Linie, welche parallel zur Längsachse verläuft, angeordnet sind und eine gemeinsame Mischkammer bilden, sodass die Zusammensetzungen A und B in der gemeinsamen Mischkammer durch ein Schütteln der Mischkapsel miteinander vermischbar zur Zusammensetzung C sind.

Durch eine einfache Drehung des ersten und/oder zweiten Rohrabschnitts um im Wesentlichen 180 Grad um die Längsachse der Mischkapsel ist der gemeinsame Mischraum aus der ersten und zweiten Kammer erzeugbar (siehe Fig. 2b). Ein zusätzliches Volumen zum Mischen der Zusammensetzungen A und B zur Zusammensetzung C wird nicht benötigt. Stehen die erste Mittelachse der ersten Kammer und die zweite Mittelachse der zweiten Kammer koaxial zueinander, so kommunizieren die erste Kammer und die zweite Kammer über die erste und zweite Öffnung miteinander, wobei sich die erste und zweite Öffnung miteinander kongruent decken und die erste und die zweite Öffnung so dicht parallel und deckungsgleich zueinander stehen, dass sie sich gegenseitig abdichten, sodass eine dichte gemeinsame Mischkammer entsteht.

Erfindungsgemäß weist die erste Kammer an ihrer der zweiten Kammer abgewandten Seite eine erste Anschlussgeometrie auf, die dazu ausgebildet ist, eine Düse mit Kolbenabschnitt mit zentral gelegener Kanüle und Mittel zum Durchstoßen einer Membran der gemeinsamen Mischkammer aufzunehmen, wobei die Kanüle an ihrer der gemeinsamen Mischkammer zugewandten Seite kommunizierend mit der gemeinsamen Mischkammer und an ihrer der Mischkammer abgewandten Seite kommunizierend mit der Umgebung ausgebildet ist.

Damit besteht in vorteilhafter Weise Kompatibilität mit einer Düse mit Kolbenabschnitt von gängigen PLT-Applikatoren. Die Mischkapsel kann also als Zwischenglied in herkömmliche PLT-Applikatoren eingespannt werden und stellt somit die Zusammensetzung C zur Anwendung bereit. Mittels Düse mit Kanüle des PLT-Applikators ist die Zusammensetzung C aus der gemeinsamen Mischkammer herausbeförderbar.

Ein PLT-Applikator ist eine pistolenähnliche Vorrichtung zur Applikation von Zusammensetzungen im Dentalbereich.

Dazu muss zunächst die Membran und/oder Verschlussfolie an einer Seite der ersten Kammer, welche von der zweiten Kammer abgewandt ist, durchstoßen werden. Dafür stellt die Düse mit Kolbenabschnitt Mittel zum Durchstoßen der Membran der gemeinsamen Mischkammer bereit.

In einer weiteren Ausführungsform ist vorgesehen, dass die Düse, mit Kolbenabschnitt mit zentral gelegener Kanüle und Mittel zum Durchstoßen der Membran, der gemeinsamen Mischkammer parallel zur zentralen Längsachse verschiebbar in die erste Kammer einführbar ist, sodass die gemeinsame Mischkammer hinsichtlich ihres Volumens verkleinerbar ist.

Dadurch wird in vorteilhafter Weise Druck auf die Zusammensetzung C in dem gemeinsamen Mischraum der Mischkapsel ausgeübt, sodass die Zusammensetzung C in die Kanüle der Düse hinein entweicht und an die Umgebung abgegeben werden kann. Der PLT-Applikator sondert somit die Zusammensetzung C an die Umgebung ab.

In einer Ausführungsform weist die zweite Kammer an ihrer der ersten Kammer abgewandten Seite eine zweite Anschlussgeometrie auf, die dazu ausgebildet ist, einen Kolben mit Lumen zur Aufnahme eines Einpresskolbens eines PLT-Applikators aufzunehmen, wobei der Kolben mit Lumen zur Aufnahme des Einpresskolbens eines PLT-Applikators verschiebbar parallel zur Längsachse gelagert ist, wobei bei einem Verschieben des Kolbens parallel zur Längsachse in Richtung der gemeinsamen Mischkammer die Mischkammer hinsichtlich ihres Volumens verkleinerbar ist.

Somit kann in vorteilhafter Weise, mittels eines Einpresskolbens eines PLT-Applikators durch Schieben des Kolbens mit Lumen, das Volumen der gemeinsamen Mischkammer verkleinert werden, und die Zusammensetzung C aus der Mischkapsel durch die Kanüle hindurch herausgepresst werden. Die erfindungsgemäße Mischkapsel kann als Zwischenglied zwischen Einpresskolben und Düse mit Kolbenabschnitt eines PLT-Applikators eingespannt werden. Dabei übernimmt sie in erster Linie die Funktion einer Bereitstellung des Mischprodukts C aus den Zusammensetzungen A und B. Der PLT-Applikator stellt lediglich Funktionalitäten für den Auspressvorgang bereit.

In einer weiteren Ausführungsform ist vorgesehen, dass die Mischkapsel ein erstes Gehäuse und ein zweites Gehäuse umfasst, wobei das erste Gehäuse die erste Kammer umfasst, wobei das zweite Gehäuse die zweite Kammer umfasst, wobei das erste Gehäuse und das zweite Gehäuse jeweils eine kombinierte Form aus einem Rohrabschnitt und einem spitzzulaufenden Sockel aufweisen.

Das erste Gehäuse mit der ersten massiven Ausformung umfasst den ersten Rohrabschnitt und die erste Kammer. Das zweite Gehäuse mit der zweiten massiven Ausformung umfasst den zweiten Rohrabschnitt und die zweite Kammer. In einer Ausführungsform bildet die erste massive Ausformung einen ersten spitzzulaufenden Sockel und die zweite massive Ausformung einen zweiten spitzzulaufenden Sockel. In der Handhabungsposition bilden der erste und der zweite Sockel eine gemeinsame kompakte Struktur, die geeignet ist, sitzfest in die Halterung eines Applikators positioniert zu werden, um dadurch die Mischkapsel an dem Applikator zu fixieren. Die Ecken des jeweiligen spitzzulaufenden Sockels können abgerundet sein. Die spitzzulaufenden Sockel bilden in der Handhabungsposition in vorteilhafter Weise eine einrastbare Ausformung, welche insbesondere zur Fixierung in einem Applikator dient, besonders bevorzugt ist die Ausformung in eine Ausstanzung einer Halterung eines PLT-Applikators einsetzbar (siehe Fig. 3c). Vorzugsweise bilden die beiden spitzzulaufenden Sockel in der Handhabungsposition ein Prisma mit dreieckigem Querschnitt. Damit besteht Kompatibilität zu einer Vielzahl von gängigen PLT-Applikator-Typen. Die Sockel dienen bevorzugt in der Handhabungsposition der Möglichkeit der Fixierung der Mischkapsel in einem Applikator.

In einer Ausführungsform bilden in der Lagerposition das erste Gehäuse und das zweite Gehäuse zusammen eine Form ähnlich eines umgekehrten Z's, wobei in der Handhabungsposition das erste Gehäuse und das zweite Gehäuse im Wesentlichen eine T-Form bilden.

Somit liegen in der Lagerposition die Zusammensetzungen A und B räumlich getrennt voneinander vor: Zusammensetzung A in der ersten Kammer des ersten Gehäuses und die Zusammensetzung B in der zweiten Kammer des zweiten Gehäuses. In der Handhabungsposition wird die Trennung aufgegeben und die Zusammensetzungen A und B liegen in der gemeinsamen Mischkammer vor, wo sie zur Zusammensetzung C vermischt werden. Lediglich eine Drehung der Gehäuse gegeneinander um im Wesentlichen 180 Grad ist erforderlich, um die Mischkapsel vom Lagerzustand in die Mischphase zu überführen.

In einer weiteren Ausführungsform ist vorgesehen, dass die Mischkapsel in ihrer Handhabungsposition unterhalb der Längsachse eine einrastbare griffartige Ausformung aufweist, wobei bei einer Aufnahme der einrastbaren griffartigen Ausformung in eine Ausstanzung einer Halterung des PLT-Applikators der PLT-Applikator in seine Auspressposition einrastet.

Dadurch kann in vorteilhafter Weise die Mischkapsel stabil und fest in den PLT-Applikator eingespannt werden. Somit kann der Einpresskolben des PLT-Applikators auch tatsächlich den Kolben mit Lumen der Mischkammer effektiv bewegen, ohne dass es zu Verrutschungen und Kraftverlusten kommt. Die einrastbare, griffartige Ausformung wird durch die zwei spitzzulaufenden Sockel der zwei drehbar bzw. rotierbar zueinander gelagerten Gehäuse gebildet. Sie bietet durch Einrasten genügend Widerstand damit der Auspressvorgang, der durch den Einpresskolben des PLT-Applikators initiiert und durchgeführt wird, auch erfolgreich abläuft.

In einer Ausführungsform umfasst ein erster Rohrabschnitt des ersten Gehäuses die erste Kammer und ein zweiter Rohrabschnitt des zweiten Gehäuses die zweite Kammer, wobei in der Handhabungsposition der Mischkapsel die gemeinsame Kammer aus der ersten Kammer und der zweiten Kammer gebildet wird, wobei der erste Rohrabschnitt und der zweite Rohrabschnitt eine gemeinsame Röhre bilden.

Die gemeinsame Röhre kann somit in vorteilhafter Weise in die Pistolenlauf-ähnliche Struktur des PLT-Applikators eingebaut werden. Die gemeinsame Röhre umfasst die gemeinsame Mischkammer, die somit Teil des PLT-Applikators wird. Die Zusammensetzung C in der gemeinsamen Mischkammer kann somit mittels "Spannen" des PLT-Applikators aus der Kanüle herausgepresst werden.

In einer weiteren Ausführungsform ist vorgesehen, dass der erste Rohrabschnitt an seiner dem zweiten Rohrabschnitt zugewandten Seite eine erste Verschlussfolie und der zweite Rohrabschnitt an seiner dem ersten Rohrabschnitt zugewandten Seite eine zweite Verschlussfolie aufweist, wobei die erste Verschlussfolie und die zweite Verschlussfolie durch Kraft zerstörbar sind.

Dadurch kann die erste und die zweite Kammer in vorteilhafter Weise und ohne großen Kraftaufwand von einem verschlossenen Zustand in einen geöffneten Zustand überführt werden. In der Lagerposition befinden sich die erste und die zweite Kammer in einem verschlossenen Zustand. In der Handhabungsposition befinden sich die erste und die zweite Kammer in einem geöffneten Zustand. Die Kraft, die durch das Mischen von Zusammensetzung A und Zusammensetzung B ausgeübt wird, reicht aus, um die beiden Verschlussfolien zu durchbrechen.

Denkbar sind auch alternative Verschlussvorrichtungen für die erste und zweite Öffnung.

In einer Ausführungsform weist die erste Kammer an ihrer der zweiten Kammer abgewandten Seite eine dritte Verschlussfolie auf.

An der Schnittstelle zwischen gemeinsamem Mischraum und Düse mit Kolbenabschnitt mit Kanüle befindet sich somit eine dritte Verschlussfolie, die beim Einsetzen der Düse mit Kolbenabschnitt in die gemeinsame Mischkammer nachgibt bzw. leicht zerstörbar ist. Somit kann die Mischkapsel als Zwischenglied eines PLT-Applikators benutzerfreundlich verwendet werden.

In einer weiteren Ausführungsform ist vorgesehen, dass die Mischkapsel Cycloolefinpolymere, Cycloolefin-Copolymere, Polyethylen, Polypropylen, Polyethylen mit geringer Dichte, Polyethylen mit hoher Dichte, Polypropylen mit geringer Dichte, Polypropylen mit hoher Dichte und/oder Mischungen enthaltend mindestens eines der vorgenannten Polymere umfasst.

Cycloolefin-Copolymere weisen eine hohe Steifigkeit, Festigkeit und Härte sowie niedrige Dichte und hohe Transparenz bei guter Säure- und Laugenbeständigkeit auf. Hervorzuheben ist die äußerst geringe Wasseraufnahme/Wasserdampfdurchlässigkeit. Alle PolyethylenTypen zeichnen sich durch hohe chemische Beständigkeit, gute elektrische Isolationsfähigkeit und ein gutes Gleitverhalten aus.

PE-HD (HDPE): Schwach verzweigte Polymerketten, daher hohe Dichte zwischen 0,94 g/cm3 und 0,97 g/cm³, ("HD" steht für "high density"). PE-LD (LDPE): Stark verzweigte Polymerketten, daher geringe Dichte zwischen 0,915 g/cm3 und 0,935 g/cm³, ("LD" steht für "low density"). Hohe Kristallinität bei Polymeren führt zu hoher Dichte, Steifigkeit, Härte, Abriebfestigkeit, Gebrauchstemperatur und Chemikalienbeständigkeit. Polyethylen besitzt eine hohe Beständigkeit gegen Säuren, Laugen und weitere Chemikalien. Polyethylen nimmt kaum Wasser auf. Die Gas- und Wasserdampfdurchlässigkeit (nur polare Gase) ist niedriger als bei den meisten Kunststoffen; Sauerstoff, Kohlendioxid und Aromastoffe lässt es hingegen gut durch. Die Eigenschaften von Polypropylen ähneln Polyethylen; es ist jedoch etwas härter und wärmebeständiger.

Die Erfindung betrifft ebenfalls ein Verfahren zum Mischen von mindestens zwei Zusammensetzungen A und B zu einer Zusammensetzung C in einer Mischkapsel, wobei das Verfahren die Schritte umfasst:
(i) Überführen der Mischkapsel aus einer Lagerposition in eine Handhabungsposition durch Drehen einer ersten Kammer und/oder einer zweiten Kammer um eine Längsachse der Mischkapsel solange bis eine erste Öffnung der ersten Kammer und eine zweite Öffnung der zweiten Kammer kongruent zueinander angeordnet sind;
(ii) Mischen der Zusammensetzung A und der Zusammensetzung B in der gemeinsamen Mischkammer, indem die Mischkapsel bewegt wird;
(iii) Erhalt der Zusammensetzung C,
(iv) Aufsetzen der Düse mit Kolbenabschnitt mit zentral gelegener Kanüle und Mittel zum Durchstoßen einer Membran der gemeinsamen Mischkammer auf die erste Anschlussgeometrie der ersten Kammer, wobei die gemeinsame Mischkammer verkleinert wird;
(v) optional Einrasten der einrastbaren griffartigen Ausformung der Mischkapsel (1) in eine Ausstanzung einer Halterung eines PLT-Applikators, sodass der PLT-Applikator in seine Auspressposition gelangt.

Gegenstand der Erfindung ist somit ein Verfahren zum Mischen von mindestens zwei Zusammensetzungen A und B zu einer Zusammensetzung C in der erfindungsgemäßen Mischkapsel, insbesondere von pastösen, knetbaren bis festen, vorzugsweise thixotropen Zusammensetzungen, besonders bevorzugt von dentalen Zusammensetzungen.

In einer weiteren Ausführungsform ist vorgesehen, dass das (ii) Mischen der Zusammensetzung A und der Zusammensetzung B zur Zusammensetzung C in der gemeinsamen Mischkammer von einem Universalmischgerät für Dentalmaterialien durchgeführt wird.

Der Mischvorgang kann mittels eines bekannten kommerziellen Mischgeräts, z.B. 3M-ESPE-CAPMIX, durchgeführt werden, indem die Mischkapsel in die vorgesehene Halterung des Mischgeräts eingespannt wird. Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt. Alternativ ist eine manuelle Mischung möglich.

Damit wird die erfindungsgemäße Mischkapsel quasi ein Teil eines PLT-Applikators. Die Zusammensetzung C, das Mischprodukt aus den Zusammensetzungen A und B, wird durch das Einspannen der Mischkapsel in den PLT-Applikator durch die Kanüle des PLT-Applikators hindurch auspressbar mittels des Einpresskolbens des PLT-Applikators.

Ferner betrifft die Erfindung eine Verwendung einer Mischkapsel nach Anspruch 1, bei welcher eine zweite Kammer in eine Handhabungsposition drehbar ist durch Drehen um eine Längsachse des Kapselgehäuses, wobei in der Handhabungsposition die zweite Kammer mit einer ersten Kammer eine gemeinsame Mischkammer bildet, zum Lagern und Mischen pastöser bis knetbarer Zusammensetzung. bildet.

Die Erfindung betrifft eine Verwendung einer Mischkapsel zum Lagern und Mischen von pastösen bis knetbaren dentalen Zwei-Komponenten Zusammensetzungen. Ferner betrifft die Erfindung ein Kit umfassend eine Mischkapsel nach Anspruch 1 und die erste Kammer (2) mit einer Zusammensetzung A und die zweite Kammer (3) mit einer Zusammensetzung B.

Die Mischkapsel kann auch zum Lagern, Mischen und Anwenden von Fluiden, Pulvern und Flüssigkeiten verwendet werden. Es wurde somit eine Mischkapsel entwickelt, die eine Lagerung und ein Mischen von pastösen bis knetbaren und optional mit pulverförmigen oder pastösen bis festen und zugleich thixotropen Mehrkomponentenzusammensetzungen erlaubt, wobei vorzugsweise ebenso flüssige mit pulverförmigen Komponenten gemischt werden können. Die mischbaren Zusammensetzungen sind vorzugsweise thixotrope dentale Zusammensetzungen.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.
**Figurenbeschreibung** **Fig. 1a** zeigt die erfindungsgemäße Mischkapsel **1** in ihrer Ausgangsposition, der Lagerposition **4.**
**Fig. 1b** zeigt die erfindungsgemäße Mischkapsel **1** in ihrer Gebrauchssituation mit der Handhabungsposition **6.**
**Fig. 2a** zeigt die erfindungsgemäße Mischkapsel **1** in ihrer Ausgangsposition, der Lagerposition **4**, im Querprofil.
**Fig. 2b** zeigt die erfindungsgemäße Mischkapsel **1** im Querprofil in ihrer Gebrauchssituation mit der Handhabungsposition **6** nach einer Drehung des zweiten Gehäuses **19** um im Wesentlichen 180 Grad um die Längsachse der Mischkapsel.
**Fig. 2c** zeigt die erfindungsgemäße Mischkapsel **1** im Querprofil in ihrer Gebrauchssituation mit der Handhabungsposition **6** nach einem Durchstoßen der ersten Verschlussfolie **25** und der zweiten Verschlussfolie **26** nach einem Bewegen der Mischkapsel **1.**
**Fig. 3a** zeigt die erfindungsgemäße Mischkapsel **1** im Querprofil mit an der ersten Anschlussgeometrie **8** aufgesetzter Düse **10** mit Kolbenabschnitt **10a.**
**Fig. 3b** zeigt die erfindungsgemäße Mischkapsel **1** im Querprofil mit in die gemeinsame Mischkammer **7** eingefahrener Düse **10** mit Kolbenabschnitt **10a.**
**Fig. 4** zeigt die erfindungsgemäße Mischkapsel **1** mit einem PLT-Applikator **15.**

### Ausführungsformen der Erfindung

**Fig. 1a** zeigt die erfindungsgemäße Mischkapsel **1** in ihrer Ausgangsposition, der Lagerposition **4.** Die Mischkapsel **1** besteht aus zwei Gehäusen, einem erstem Gehäuse **18** und einem zweiten Gehäuse **19.** Das erste Gehäuse **18** besteht aus einem ersten Rohrabschnitt **20** und einem ersten spitzzulaufenden Sockel **21.** Das zweite Gehäuse **19** besteht aus einem zweiten Rohrabschnitt **23** und einem zweiten spitzzulaufenden Sockel **24.** Innerhalb des ersten Rohrabschnitts **20** ist die erste Kammer **2** angeordnet. Innerhalb des zweiten Rohrabschnitts **23** ist die zweite Kammer **3** angeordnet. Das erste Gehäuse **18** und das zweite Gehäuse **19** sind drehbar zueinander gelagert um eine Längsachse, welche parallel zum ersten Rohrabschnitt **20** und dem zweiten Rohrabschnitt **23** und zwischen dem ersten Rohrabschnitt **20** und dem zweiten Rohrabschnitt **23** in dem ersten spitzzulaufenden Sockel **21** und in dem zweiten spitzzulaufenden Sockel **24** angeordnet ist, insbesondere, wenn die Mischkapsel in einer Lagerposition angeordnet ist. Besonders bevorzugt liegen in der Lagerposition die Längsachse der Mischkapsel sowie die erste Längs- bzw. Mittelachse der ersten Kammer und die zweite Längs- bzw. Mittelachse der zweiten Kammer in einer planaren Ebene und die Längs- bzw. Mittelachsen der Kammern auf gegenüberliegenden Seiten der Längsachse der Mischkapsel in der Ebene.

**Fig. 1b** zeigt die erfindungsgemäße Mischkapsel **1** in ihrer Gebrauchssituation mit der Handhabungsposition **6** nach einer Drehung des zweiten Gehäuses **19** um im Wesentlichen 180 Grad um die Längsachse, welche parallel zum ersten Rohrabschnitt **20** und dem zweiten Rohrabschnitt **23** und initial in der Lagerposition **4** des zweiten Gehäuses **19** zwischen dem ersten Rohrabschnitt **20** und dem zweiten Rohrabschnitt **23** in dem ersten spitzzulaufenden Sockel **21** und in dem zweiten spitzzulaufenden Sockel **24** angeordnet ist. Die erste Mittelachse des ersten Rohrabschnitts **20** und die zweite Mittelachse des zweiten Rohrabschnitts **23** liegen nun koaxial in einer Linie und der erste spitzzulaufende Sockel **21** und der zweite spitzzulaufende Sockel **24** bilden eine einrastbare griffartige Ausformung **12.** Die im ersten Rohrabschnitt **20** angeordnete erste Kammer **2** und die im zweiten Rohrabschnitt **23** angeordnete zweite Kammer **3** liegen nun in einer Linie koaxial. Der erste Rohrabschnitt **20** weist eine erste Anschlussgeometrie **8** zur Aufnahme einer Düse **10** mit Kolbenabschnitt **10a** und Kanüle **9** eines PLT-Applikators **15** auf (nicht eingezeichnet). Der zweite Rohrabschnitt **23** weist eine zweite Anschlussgeometrie **27** zur Aufnahme eines Kolbens **11** auf.

**Fig. 2a** zeigt die erfindungsgemäße Mischkapsel **1** in ihrer Ausgangsposition, der Lagerposition **4**, im Querprofil. Die erste Kammer **2** im ersten Rohrabschnitt **20** liegt versetzt längs der Längsachse und parallel zur zweiten Kammer **3** im zweiten Rohrabschnitt **23.** Die erste Kammer **2** enthält die Zusammensetzung A. Die zweite Kammer **3** enthält die Zusammensetzung B. Die erste Kammer **2** weist die erste Anschlussgeometrie **8** zur Aufnahme einer Düse **10** mit Kolbenabschnitt **10a** und Kanüle **9** eines PLT-Applikators **15** (nicht eingezeichnet) auf. Die zweite Kammer **3** weist die zweite Anschlussgeometrie **27** zur Aufnahme eines Kolbens **11** auf. Die erste Kammer **2** ist an der der ersten Anschlussgeometrie **8** abgewandten Seite durch eine erste Verschlussfolie an einer ersten Öffnung **25** verschlossen. Die zweite Kammer **3** ist an der dem Kolben **11** abgewandten Seite, an der zweiten Öffnung **26**, durch eine zweite Verschlussfolie verschlossen.

**Fig. 2b** zeigt die erfindungsgemäße Mischkapsel **1** im Querprofil. in ihrer Gebrauchssituation mit der Handhabungsposition **6** nach einer Drehung des zweiten Gehäuses **19** um im Wesentlichen 180 Grad um die Längsachse, welche parallel zum ersten Rohrabschnitt **20** und dem zweiten Rohrabschnitt **23** und initial in der Lagerposition **4** des zweiten Gehäuses **19** zwischen dem ersten Rohrabschnitt **20** und dem zweiten Rohrabschnitt **23** in dem ersten spitzzulaufenden Sockel **21** und in dem zweiten spitzzulaufenden Sockel **24** angeordnet ist. Die erste Mittelachse des ersten Rohrabschnitts **20** und die zweite Mittelachse des zweiten Rohrabschnitts **23** liegen nun koaxial in einer Linie und der erste spitzzulaufende Sockel **21** und der zweite spitzzulaufende Sockel **24** bilden eine einrastbare griffartige Ausformung **12.** Die im ersten Rohrabschnitt **20** angeordnete erste Kammer **2** und die im zweiten Rohrabschnitt **23** angeordnete zweite Kammer **3** liegen nun in einer Linie koaxial. Der erste Rohrabschnitt **20** weist eine erste Anschlussgeometrie **8** zur Aufnahme einer Düse **10** mit Kolbenabschnitt **10a** und Kanüle **9** eines PLT-Applikators auf (nicht eingezeichnet). Der zweite Rohrabschnitt **23** weist eine zweite Anschlussgeometrie **27** zur Aufnahme eines Kolbens **11** auf. Die erste Kammer **2** ist an der der ersten Anschlussgeometrie **8** abgewandten Seite durch eine erste Verschlussfolie an der ersten Öffnung **25** verschlossen. Die zweite Kammer **3** ist an der dem Kolben **11** abgewandten Seite durch eine zweite Verschlussfolie an der zweiten Öffnung **26** verschlossen.

**Fig. 2c** zeigt die erfindungsgemäße Mischkapsel **1** im Querprofil in ihrer Gebrauchssituation mit der Handhabungsposition **6** nach einem Durchstoßen der ersten Verschlussfolie an der ersten Öffnung **25** und der zweiten Verschlussfolie an der zweiten Öffnung **26** nach einem Bewegen der Mischkapsel **1.** Die erste Kammer **2** und die zweite Kammer **3** bilden nun eine gemeinsame Mischkammer **7.** Die Zusammensetzung A und die Zusammensetzung B können nun zu einer Zusammensetzung C vermischt werden.

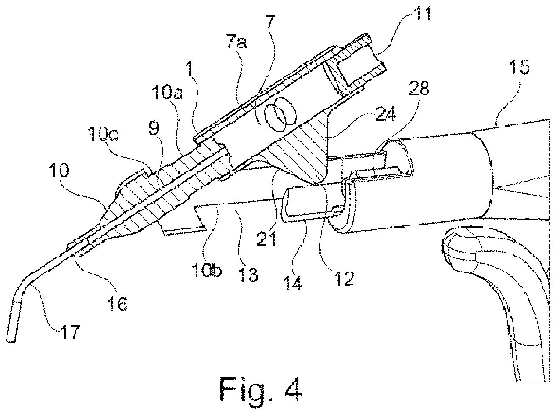

**Fig. 3a** zeigt die erfindungsgemäße Mischkapsel **1** im Querprofil mit an der ersten Anschlussgeometrie **8** aufgesetzter Düse **10** mit Kolbenabschnitt **10a** eines PLT-Applikators (siehe Fig. 4). Die Düse **10** weist eine zentral gelegene Kanüle **9** auf. Die Düse **10** befindet sich in ihrer Startposition am Rande der gemeinsamen Mischkammer **7** in Nähe der ersten Anschlussgeometrie **8.**

**Fig. 3b** zeigt die erfindungsgemäße Mischkapsel **1** im Querprofil mit in die gemeinsame Mischkammer **7** eingefahrener Düse **10** mit Kolbenabschnitt **10a** eines PLT-Applikators (siehe Fig. 4). Das Innenvolumen der gemeinsamen Mischkammer **7** ist bis auf ein Minimum reduziert. Die Zusammensetzung C wird stark zusammengepresst. Die Mischkapsel **1** liegt auf einer Halterung **14** eines PLT Applikators **15** (nicht eingezeichnet). Die Halterung **14** weist eine Ausstanzung **13** auf.

**Fig. 3c** zeigt die erfindungsgemäße Mischkapsel **1** im Querprofil im, in die Ausstanzung **13** der Halterung **14** eines PLT-Applikators **15** eingelegten Zustand, mit in die gemeinsame Mischkammer eingefahrener Düse **10.** Die spitzzulaufenden Sockel **21, 24** des ersten und zweiten Gehäuses **18, 19** bilden eine einrastbare griffartige Ausformung **12,** welche in die Ausstanzung **13** der Halterung **14** des PLT Applikators **15** einsetzbar ist. Die Mischkapsel **1** ist nun einsatzbereit für eine Applikation, d.h. zum Austragen der Zusammensetzung C aus der Mischkapsel **1** mithilfe des PLT-Applikators **15.**

**Fig. 4** zeigt die erfindungsgemäße Mischkapsel **1** mit einem PLT-Applikator **15.** Der PLT-Applikator **15** weist eine Halterung **14** mit einer Ausstanzung **13** auf, in welche die einrastbare griffartige Ausformung **12** aus den spitzzulaufenden Sockeln **21, 24** der Mischkapsel **1** einsetzbar ist. Im so eingesetzten Zustand ist der Kolben **11** durch einen Einpresskolben **28** des PLT-Applikators **15** in die gemeinsame Mischkammer **7** einpressbar, wodurch die Zusammensetzung C durch die Kanüle **9** der Düse **10** mit Kolbenabschnitt **10a** aus der Mischkapsel **1** heraus befördert wird.

### Bezugszeichenliste

- 1: Mischkapsel
- 2: erste Kammer
- 3: zweite Kammer
- 4: Lagerposition
- 5: Längsachse
- 6: Handhabungsposition
- 7: gemeinsame Mischkammer
- 7a: Membran
- 8: erste Anschlussgeometrie
- 9: Kanüle
- 10: Düse
- 10a: Kolbenabschnitt
- 10b: Mittel zum Durchstoßen der Membran
- 11: Kolben
- 12: einrastbare griffartige Ausformung
- 13: Ausstanzung
- 14: Halterung
- 15: PLT Applikator
- 18: erstes Gehäuse
- 19: zweites Gehäuse
- 20: erster Rohrabschnitt
- 21: erster spitzzulaufender Sockel
- 22: dritte Verschlussfolie
- 23: zweiter Rohrabschnitt
- 24: zweiter spitzzulaufender Sockel
- 25: erste Öffnung
- 26: zweite Öffnung
- 27: zweite Anschlussgeometrie
- 28: Einpresskolben

## Patentansprüche

1. Mischkapsel (1) umfassend eine erste Kammer (2) zur Aufnahme einer Zusammensetzung A und eine zweite Kammer (3) zur Aufnahme einer Zusammensetzung B, wobei die erste Kammer (2) und die zweite Kammer (3) rotierbar um die Längsachse (5) der Mischkapsel (1) angeordnet sind, wobei die erste Kammer (2) eine erste Öffnung (25) umfasst, wobei die zweite Kammer (3) eine zweite Öffnung (26) umfasst, wobei die erste Öffnung (25) und die zweite Öffnung (26) senkrecht zur Längsachse (5) und aufeinander zugewandt sowie zueinander planparallel und senkrecht zur Längsachse angeordnet sind, insbesondere senkrecht auf der Längsachse stehen, bevorzugt senkrecht von der Längsachse beabstandet angeordnet sind, wobei in einer Lagerposition (4) die erste Öffnung (25) und die zweite Öffnung (26) inkongruent zueinander angeordnet sind, wobei in einer Handhabungsposition (6) die erste Öffnung (25) und die zweite Öffnung (26) kongruent zueinander angeordnet sind, wobei die Mischkapsel (1) ein erstes Gehäuse (18) und ein zweites Gehäuse (19) umfasst, wobei
das erste Gehäuse (18) einen ersten Rohrabschnitt (20) und einem ersten spitzzulaufenden Sockel (21) umfasst, wobei das zweite Gehäuse (19) einen zweiten Rohrabschnitt (23) und einen zweiten spitzzulaufenden Sockel (24) umfasst, wobei innerhalb des ersten Rohrabschnitts (20) die erste Kammer (2) angeordnet ist, wobei innerhalb des zweiten Rohrabschnitts (23) die zweite Kammer (3) angeordnet ist, wobei das erste Gehäuse (18) und das zweite Gehäuse (19) drehbar zueinander gelagert sind um die Längsachse, welche parallel zum ersten Rohrabschnitt (20) und dem zweiten Rohrabschnitt (23) und, wobei die Längsachse zwischen dem ersten Rohrabschnitt (20) und dem zweiten Rohrabschnitt (23) und zwischen oder in dem ersten spitzzulaufenden Sockel (21) und in dem zweiten spitzzulaufenden Sockel (24) angeordnet ist,
die spitzzulaufenden Sockel (21, 24) des ersten und zweiten Gehäuses (18, 19) dazu ausgebildet sind, durch Drehung um die Längsachse eine einrastbare griffartige Ausformung (12) zu bilden, **dadurch gekennzeichnet, dass**
die erste Kammer (2) an ihrer der zweiten Kammer (3) abgewandten Seite eine erste Anschlussgeometrie (8) aufweist, die dazu ausgebildet ist, eine Düse (10) mit Kolbenabschnitt (10a) mit zentral gelegener Kanüle (9) und Mittel (10b) zum Durchstoßen einer Membran (7a) der gemeinsamen Mischkammer (7) aufzunehmen, wobei die Kanüle (9) an ihrer der gemeinsamen Mischkammer (7) zugewandten Seite kommunizierend mit der gemeinsamen Mischkammer (7) und an ihrer der Mischkammer (7) abgewandten Seite kommunizierend mit der Umgebung ausgebildet ist.

2. Mischkapsel (1) nach Anspruch 1, **dadurch gekennzeichnet, dass** die erste Öffnung (25) der ersten Kammer (2) und die zweite Öffnung (26) der zweiten Kammer (3) um die Längsachse (5) der Mischkapsel rotierbar und im Verhältnis zueinander planparallel angeordnet sind.

3. Mischkapsel (1) nach Anspruch 2, **dadurch gekennzeichnet, dass** in der Lagerposition (4) eine erste Mittelachse der ersten Kammer (2) und eine zweite Mittelachse der zweiten Kammer (3) längs der Längsachse (5) der Mischkapsel (1) parallel und versetzt zueinander angeordnet sind.

4. Mischkapsel (1) nach Anspruch 3, **dadurch gekennzeichnet, dass** die Längsachse (5) der Mischkapsel eine Drehachse ist, um welche die erste Kammer (2) und/oder die zweite Kammer (3) drehbar gelagert ist, wobei durch eine Drehung der ersten Kammer (2) und/oder der zweiten Kammer (3) um die Längsachse (5) der Mischkapsel (1), die Mischkapsel (1) in die Handhabungsposition (6) überführbar ist, wobei in der Handhabungsposition (6) die erste Mittelachse der ersten Kammer (2) und die zweite Mittelachse der zweiten Kammer (3) koaxial in einer Linie, welche parallel zur Längsachse (5) verläuft, angeordnet sind und eine gemeinsame Mischkammer (7) bilden, sodass die Zusammensetzungen A und B in der gemeinsamen Mischkammer (7) durch ein Schütteln der Mischkapsel (1) miteinander vermischbar zur Zusammensetzung C sind.

5. Mischkapsel (1) nach einem Ansprüche 1 bis 4, **dadurch gekennzeichnet, dass** die gemeinsame Mischkammer (7) hinsichtlich ihres Volumens verkleinerbar ist, dadurch dass die Düse (10) mit Kolbenabschnitt (10a) mit zentral gelegener Kanüle (9) und Mittel (10b) zum Durchstoßen der Membran (7a) der gemeinsamen Mischkammer (7) parallel zur zentralen Längsachse (5) verschiebbar in die erste Kammer (2) einführbar ist.

6. Mischkapsel (1) nach einem der Ansprüche 1 bis 5, **dadurch gekennzeichnet, dass** die zweite Kammer (2) an ihrer der ersten Kammer (3) abgewandten Seite eine zweite Anschlussgeometrie (27) aufweist, die dazu ausgebildet ist, einen Kolben (11) mit Lumen zur Aufnahme eines Einpresskolbens (28) eines PLT-Applikators (15) aufzunehmen, wobei der Kolben (11) mit Lumen zur Aufnahme des Einpresskolbens (28) eines PLT-Applikators (15) verschiebbar parallel zur Längsachse (5) gelagert ist, wobei bei einem Verschieben des Kolbens (11) parallel zur Längsachse (5) in Richtung der gemeinsamen Mischkammer (7) die Mischkammer (7) hinsichtlich ihres Volumens verkleinerbar ist.

7. Mischkapsel (1) nach einem der Ansprüche 1 bis 6, **dadurch gekennzeichnet, dass** die Mischkapsel (1) ein erstes Gehäuse (18) und ein zweites Gehäuse (19) umfasst, wobei das ersten Gehäuse (18) die erste Kammer (2) umfasst, wobei das zweite Gehäuse (19) die zweite Kammer (3) umfasst, wobei das erste Gehäuse (18) und das zweite Gehäuse (19) jeweils eine kombinierte Form aus einem Rohrabschnitt (20, 23) und einem spitzzulaufenden Sockel (21, 24) aufweisen.

8. Mischkapsel (1) nach Anspruch 7, **dadurch gekennzeichnet, dass** in der Lagerposition (4) das erste Gehäuse (18) und das zweite Gehäuse (19) zusammen eine Form ähnlich eines umgekehrten Z's bilden, wobei in der Handhabungsposition (6) das erste Gehäuse (18) und das zweite Gehäuse (19) im Wesentlichen eine T-Form bilden.

9. Mischkapsel (1) nach einem der Ansprüche 1 bis 8, **dadurch gekennzeichnet, dass** die Mischkapsel (1) in ihrer Handhabungsposition (6) unterhalb der Längsachse (5) eine einrastbare griffartige Ausformung (12) aufweist, wobei bei einer Aufnahme der einrastbaren griffartigen Ausformung (12) in eine Ausstanzung (13) einer Halterung (14) eines PLT-Applikators (15) der PLT-Applikator (15) in seine Auspressposition einrastet, wobei der PLT-Applikator eine pistolenähnliche Vorrichtung zur Applikation von Zusammensetzungen im Dentalbereich ist.

10. Mischkapsel (1) nach einem der Ansprüche 1 bis 9, **dadurch gekennzeichnet, dass** ein erster Rohrabschnitt (20) des ersten Gehäuses (18) die erste Kammer (2) und ein zweiter Rohrabschnitt (23) des zweiten Gehäuses (19) die zweite Kammer (3) umfasst, wobei in der Handhabungsposition (6) der Mischkapsel (1) die gemeinsame Kammer (7) aus der ersten Kammer (2) und der zweiten Kammer (3) gebildet wird, wobei der erste Rohrabschnitt (20) und der zweite Rohrabschnitt (23) eine gemeinsame Röhre bilden.

11. Mischkapsel (1) nach Anspruch 10, **dadurch gekennzeichnet, dass** der erste Rohrabschnitt (20) an seiner dem zweiten Rohrabschnitt (23) zugewandten Seite eine erste Verschlussfolie und der zweite Rohrabschnitt (23) an seiner dem ersten Rohrabschnitt (20) zugewandten Seite eine zweite Verschlussfolie aufweist, wobei die erste Verschlussfolie und die zweite Verschlussfolie durch Kraft zerstörbar sind.

12. Mischkapsel (1) nach einem der Ansprüche 1 bis 11, **dadurch gekennzeichnet, dass** die erste Kammer (2) an ihrer der zweiten Kammer (3) abgewandten Seite eine dritte Verschlussfolie (22) aufweist.

13. Mischkapsel (1) nach einem der Ansprüche 1 bis 12, **dadurch gekennzeichnet, dass** die Mischkapsel Cycloolefinpolymer, Cycloolefin-Copolymere, Polyethylen, Polypropylen, Polyethylen mit geringer Dichte, Polyethylen mit hoher Dichte, Polypropylen mit geringer Dichte, Polypropylen mit hoher Dichte und/oder Mischungen enthaltend mindestens eines der vorgenannten Polymere umfasst.

14. Verfahren zum Mischen von mindestens zwei Zusammensetzungen A und B zu einer Zusammensetzung C in einer Mischkapsel nach einem der Ansprüche 1 bis 13, wobei das Verfahren die Schritte umfasst:
(i) Überführen der Mischkapsel aus einer Lagerposition (4) in eine Handhabungsposition (6) durch Drehen einer ersten Kammer (2) und/oder einer zweiten Kammer (3) um eine Längsachse (5) der Mischkapsel (1) solange bis eine erste Öffnung (25) der ersten Kammer und eine zweite Öffnung (26) der zweiten Kammer kongruent zueinander angeordnet sind;
(ii) Mischen der Zusammensetzung A und der Zusammensetzung B in der gemeinsamen Mischkammer (7), indem die Mischkapsel (1) bewegt wird;
(iii) Erhalt der Zusammensetzung C,
(iv) Aufsetzen der Düse (10) mit Kolbenabschnitt (10a) mit zentral gelegener Kanüle (9) und Mittel (10b) zum Durchstoßen einer Membran (7a) der gemeinsamen Mischkammer (7) auf die erste Anschlussgeometrie (8) der ersten Kammer (2), wobei die gemeinsame Mischkammer (7) verkleinert wird;
(v) optional Einrasten der einrastbaren griffartigen Ausformung (12) der Mischkapsel (1) in eine Ausstanzung (13) einer Halterung (14) eines PLT-Applikators, sodass der PLT-Applikator in seine Auspressposition gelangt.

15. Verfahren nach Anspruch 14, **dadurch gekennzeichnet, dass** das (ii) Mischen der Zusammensetzung A und der Zusammensetzung B zur Zusammensetzung C in der gemeinsamen Mischkammer (7) von einem Universalmischgerät für Dentalmaterialien durchgeführt wird.

16. Verwendung einer Mischkapsel (1) gemäß Anspruch 1, bei welcher eine zweite Kammer (3) in eine Handhabungsposition (6) drehbar ist durch Drehen um eine Längsachse des Kapselgehäuses, wobei in der Handhabungsposition die zweite Kammer mit einer ersten Kammer (2) eine gemeinsame Mischkammer (7) bildet zum Lagern und Mischen pastöser bis knetbarer Zusammensetzung.

17. Verwendung einer Mischkapsel (1) gemäß Anspruch 16 zum Lagern und Mischen von dentalen Zwei-Komponenten Zusammensetzungen.

18. Kit umfassend eine Mischkapsel (1) nach einem der Ansprüche 1 bis 13 und die erste Kammer (2) mit einer Zusammensetzung A und die eine zweite Kammer (3) mit einer Zusammensetzung B.

## Claims

1. Mixing capsule (1) comprising a first chamber (2) to receive a composition A and a second chamber (3) to receive a composition B, the first chamber (2) and the second chamber (3) being arranged rotatably about the longitudinal axis (5) of the mixing capsule (1), the first chamber (2) comprising a first opening (25), the second chamber (3) comprising a second opening (26), the first opening (25) and the second opening (26) being arranged perpendicularly to the longitudinal axis (5) and faced to each other as well as plan-parallelly to each other and perpendicularly to the longitudinal axis, in particular standing perpendicularly on the longitudinal axis, preferably being arranged perpendicularly spaced from the longitudinal axis, the first opening (25) and the second opening (26) being arranged incongruently to each other in a storage position (4), the first opening (25) and the second opening (26) being arranged congruently to each other in a handling position (6), the mixing capsule (1) comprising a first housing (18) and a second housing (19), wherein
the first housing (18) comprises a first pipe section (20) and a first tapered pedestal (21), the second housing (19) comprising a second pipe section (23) and a second tapered pedestal (24), the first chamber (2) being arranged within the first pipe section (20), the second chamber (3) being arranged within the second pipe section (23), the first housing (18) and the second housing (19) being mounted rotatably to each other about the longitudinal axis being parallel to the first pipe section (20) and the second pipe section (23), and the longitudinal axis being arranged between the first pipe section (20) and the second pipe section (23) and between or in the first tapered pedestal (23) and in the second tapered pedestal (24),
the tapered pedestals (21, 24) of the first and second housing (18, 19) being adapted to form an engageable handle-like form (12) by rotation about the longitudinal axis, **characterised in that**,
the first chamber (2) has a connection geometry (8) at its side averting the second chamber (3) being adapted to receive a nozzle (10) having a piston section (10a) having a centrally situated cannula (9) and means (10b) to penetrate a membrane (7a) of the common mixing chamber (7), the cannula (9) being formed communicating with the common mixing chamber (7) at its side facing the common mixing chamber (7) and communicating with the environment at its side averting the common mixing chamber (7).

2. Mixing capsule (1) according to claim 1, **characterised in that** the first opening (25) of the first chamber (2) and the second opening (26) of the second chamber (3) are rotatable about the longitudinal axis (5) of the mixing capsule and are arranged plane-parallelly in relation to each other.

3. Mixing capsule (1) according to claim 2, **characterised in that** a first central axis of the first chamber (2) and a second central axis of the second chamber (3) are arranged parallelly to and offset from each other along the longitudinal axis (5) of the mixing capsule in storage position (4).

4. Mixing capsule (1) according to claim 3, **characterised in that** the longitudinal axis (5) of the mixing capsule is a rotational axis, the first chamber (2) and/or the second chamber (3) is mounted rotatably about which, the mixing capsule (1) being transferable into handling position (6) by rotation of the first chamber (2) and/or the second chamber (3) about the longitudinal axis (5) of the mixing capsule (1), the first central axis of the first chamber (2) and the second central axis of the second chamber (3) being arranged coaxially in a line running parallelly to the longitudinal axis (5) and forming a common mixing chamber (7) in handling position (6), so that compositions A and B are mixable with each other to composition C in the common mixing chamber (7) by shaking the mixing capsule (1).

5. Mixing capsule (1) according to any of claims 1 to 4, characterised in thatthe common mixing chamber (7) is introducible into the first chamber (2) displaceably parallelly to the central longitudinal axis (5), so that the common mixing chamber (7) is reducible in respect of its volume as a result that the nozzle (10) having a piston section (10a) having a centrally situated cannula (9) and means (10b) to penetrate the membrane (7a) of.

6. Mixing capsule (1) according to any one of the claims 1 to 5, **characterised in that** the second chamber (3) comprises a second connection geometry (27) at its side averting the first chamber (2) being adapted to receive a piston (11) having a lumen to receive a press-in piston (28) of a PLT applicator (15), the piston (11) having a lumen to receive a press-in piston (28) of a PLT applicator (15) being mounted displaceably parallelly to the longitudinal axis (5), the common mixing chamber (7) being reducible in respect of its volume when the piston (11) being displaced parallelly to the longitudinal axis (5) in the direction of the common mixing chamber (7).

7. Mixing capsule (1) according to any one of the claims 1 to 6, **characterised in that** the mixing capsule (1) comprises a first housing (18) and a second housing (19), the first housing (18) comprising the first chamber (2), the second housing (19) comprising the second chamber (3), the first housing (18) and the second housing (19) each having a combined shape made of a pipe section (20, 23) and a tapered pedestal (21, 24).

8. Mixing capsule (1) according to claim 7, **characterised in that** the first housing (18) together with the second housing (19) form a shape similar to an inverted Z in storage position (4), the first housing (18) and the second housing (19) substantially forming a T-shape in handling position (6).

9. Mixing capsule (1) according to any one of the claims 1 to 8, **characterised in that** the mixing capsule (1) has an engageable handle-like form (12) below the longitudinal axis (5) in its handling position (6), of a PLT applicator (15) engaging into its ejection position when the engageable handle-like form (12) being received into a punching (13) of a mounting (14) of the PLT applicator (15), wherein the PLT applicator having a piston for the application of compositions in the dental field.

10. Mixing capsule (1) according to any one of the claims 1 to 9, **characterised in that** a first pipe section (20) of the first housing (18) comprises the first chamber (2) and a second pipe section (23) of the second housing (19) comprises the second chamber (3), the common mixing chamber (7) being formed from the first chamber (2) and the second chamber (3) in handling position (6) of the mixing capsule (1), the first pipe section (20) and the second pipe section (23) forming a common pipe.

11. Mixing capsule (1) according to claim 10, **characterised in that** the first pipe section (20) has a first sealing film at its side facing the second pipe section (23) and the second pipe section (23) has a second sealing film at its side facing the first pipe section (20), the first sealing film and the second sealing film being destroyable by force.

12. Mixing capsule (1) according to any one of the claims 1 to 11, **characterised in that** the first chamber (2) has a third sealing film (22) at its side averting the second chamber (3).

13. Mixing capsule (1) according to any one of the claims 1 to 12, **characterised in that** the mixing capsule comprises cyclic olefin polymer, cyclic olefin copolymers, polyethylene, polypropylene, polyethylene having low density, polyethylene having high density, polypropylene having low density, polypropylene having high density and/or mixtures containing at least one of the afore-mentioned polymers.

14. Method for mixing at least two compositions A and B to a composition C in a mixing capsule according to any one of the claims 1 to 13, the method comprising the steps of:
(i) transferring the mixing capsule from a storage position (4) into a handling position (6) by rotating a first chamber (2) and/or a second chamber (3) about a longitudinal axis (5) of the mixing capsule (1) until a first opening (25) of the first chamber and a second opening (26) of the second chamber being arranged congruently to each other;
(ii) mixing composition A and composition B in the common mixing chamber (7) by the mixing capsule (1) being moved;
(iii) obtaining composition C,
(iv) putting on the nozzle (10) having a piston section (10a) having a centrally arranged cannula (9) and means (10b) to penetrate a membrane (7a) of the common mixing chamber (7) onto the first connection geometry (8) of the first chamber (2), the common mixing chamber (7) being reduced;
(v) optionally, engaging the engageable handle-like form (12) of the mixing capsule (1) into a punching (13) of a mounting (14) of a PLT applicator, so that the PLT applicator gets to its ejection position.

15. Method according to claim 14, **characterised in that** (ii) mixing composition A and composition B to composition C in the common mixing chamber (7) is realised by a universal mixer for dental materials.

16. Use of a mixing capsule (1) according to claim 1, in which a second chamber (3) is rotatable into a handling position (6) by rotation about a longitudinal axis of the capsule housing, the second chamber with a first chamber (2) forming a common mixing chamber (7) for storing and mixing of pasty to kneadable dental compositions.

17. Use of a mixing capsule (1) according to claim 16 for storing and mixing of dental two component compositions.

18. Kit comprising a mixing capsule (1) according to any one of the claims 1 to 13 and the first chamber (2) with a composition A and the second chamber (3) with a composition B.

## Revendications

1. Capsule de mélange (1) comprenant une première chambre (2) destinée à recevoir une composition A et une deuxième chambre (3) destinée à recevoir une composition B, la première chambre (2) et la deuxième chambre (3) pouvant être mises en rotation autour de l'axe longitudinal (5) de la capsule de mélange (1), la première chambre (2) comprenant une première ouverture (25), la deuxième chambre (3) comprenant une deuxième ouverture (26), la première ouverture (25) et la deuxième ouverture (26) étant espacées, perpendiculaires à l'axe longitudinal (5) et tournées l'une vers l'autre, ainsi que planes et parallèles l'une à l'autre et perpendiculaires à l'axe longitudinal, se trouvant en particulier perpendiculaires sur l'axe longitudinal, étant préférablement espacées et perpendiculaires depuis l'axe longitudinal,
la première ouverture (25) et la deuxième ouverture (26) étant disposées de manière non congruente l'une par rapport à l'autre dans une position de stockage (4), la première ouverture (25) et la deuxième ouverture (26) étant disposées de manière congruente l'une par rapport à l'autre dans une position de manipulation (6), la capsule de mélange (1) comprenant un premier boîtier (18) et un deuxième boîtier (19),
le premier boîtier (18) comprenant une première section de tube (20) et un premier socle se terminant en pointe (21), le deuxième boîtier (19) comprenant une deuxième section de tube (23) et un deuxième socle se terminant en pointe (24), la première chambre (2) étant disposée à l'intérieur de la première section de tube (20), la deuxième chambre (3) étant disposée à l'intérieur de la deuxième section de tube (23), le premier boîtier (18) et le deuxième boîtier (19) étant montés sur pivot l'un par rapport à l'autre autour de l'axe longitudinal qui est parallèle à la première section de tube (20) et à la deuxième section de tube (23), et l'axe longitudinal étant disposé entre la première section de tube (20) et la deuxième section de tube (23) et entre ou dans le premier socle se terminant en pointe (21) et dans le deuxième socle se terminant en pointe (24),
les socles se terminant en pointe (21, 24) du premier et du deuxième boîtier (18, 19) étant conçus pour créer, par rotation autour de l'axe longitudinal, une formation en forme de poignée encliquetable (12), **caractérisée en ce que**
la première chambre (2) présente, sur son côté opposé à la deuxième chambre (3), une première géométrie de raccordement (8) qui est conçue pour recevoir une buse (10) avec une section de piston (10a) avec canule (9) située au centre et moyen (10b) pour traverser une membrane (7a) de la chambre de mélange commune (7), la canule (9) étant en communication avec la chambre de mélange commune (7) sur son côté tourné vers la chambre de mélange commune (7) et avec l'environnement sur son côté opposé à la chambre de mélange commune (7).

2. Capsule de mélange (1) selon la revendication 1, **caractérisée en ce que** la première ouverture (25) de la première chambre (2) et la deuxième ouverture (26) de la deuxième chambre (3) sont disposées en rotation autour de l'axe longitudinal (5) de la capsule de mélange et de manière plane et parallèle l'une par rapport à l'autre.

3. Capsule de mélange (1) selon la revendication 2, **caractérisée en ce qu'**un premier axe central de la première chambre (2) et un deuxième axe central de la deuxième chambre (3) sont disposés parallèlement et décalés l'un par rapport à l'autre le long de l'axe longitudinal (5) de la capsule de mélange (1) dans la position de stockage (4).

4. Capsule de mélange (1) selon la revendication 3, **caractérisée en ce que** l'axe longitudinal (5) de la capsule de mélange est un axe de rotation autour duquel la première chambre (2) et/ou la deuxième chambre (3) est montée sur pivot, la capsule de mélange (1) pouvant être transférée dans la position de manipulation (6) par une rotation de la première chambre (2) et/ou de la deuxième chambre (3) autour de l'axe longitudinal (5) de la capsule de mélange (1), le premier axe central de la première chambre (2) et le deuxième axe central de la deuxième chambre (3) étant disposés coaxialement sur une ligne qui s'étend parallèlement à l'axe longitudinal (5), dans la position de manipulation (6), et formant une chambre de mélange commune (7) de manière à ce que les compositions A et B puissent être mélangées l'une à l'autre pour former la composition C dans la chambre de mélange commune (7) par une agitation de la capsule de mélange (1).

5. Capsule de mélange (1) selon une revendication 1 à 4, **caractérisée en ce que** la chambre de mélange commune (7) peut être réduite en volume par le fait que la buse (10) avec section de piston (10a) avec canule (9) située au centre et moyen (10b) pour traverser la membrane (7a) de la chambre de mélange commune (7) peut être introduite dans la première chambre (2) de manière à pouvoir être déplacée parallèlement à l'axe longitudinal central (5).

6. Capsule de mélange (1) selon l'une des revendications 1 à 5, **caractérisée en ce que** la deuxième chambre (2) présente, sur son côté opposé à la première chambre (3), une deuxième géométrie de raccordement (27) qui est conçue pour recevoir un piston (11) avec lumen pour le logement d'un piston d'insertion (28) d'un applicateur PLT (15), le piston (11) avec lumen pour le logement du piston d'insertion (28) d'un applicateur PLT (15) étant monté de manière à pouvoir être déplacé parallèlement à l'axe longitudinal (5), la chambre de mélange (7) pouvant être réduite en volume lors d'un déplacement du piston (11) parallèlement à l'axe longitudinal (5) en direction de la chambre de mélange commune (7).

7. Capsule de mélange (1) selon l'une des revendications 1 à 6, **caractérisée en ce que** la capsule de mélange (1) comprend un premier boîtier (18) et un deuxième boîtier (19), le premier boîtier (18) comprenant la première chambre (2), le deuxième boîtier (19) comprenant la deuxième chambre (3), le premier boîtier (18) et le deuxième boîtier (19) ayant chacun une forme combinant une section de tube (20, 23) et un socle se terminant en pointe (21, 24).

8. Capsule de mélange (1) selon la revendication 7, **caractérisée en ce que** le premier boîtier (18) et le deuxième boîtier (19) forment ensemble une forme similaire à un Z inversé dans la position de stockage (4), le premier boîtier (18) et le deuxième boîtier (19) formant essentiellement une forme en T dans la position de manipulation (6).

9. Capsule de mélange (1) selon l'une des revendications 1 à 8, **caractérisée en ce que** la capsule de mélange (1) présente, dans sa position de manipulation (6), en dessous de l'axe longitudinal (5), une formation en forme de poignée encliquetable (12), l'applicateur PLT (15) s'encliquetant dans sa position d'extraction lors d'un logement de la formation en forme de poignée encliquetable (12) dans une découpe (13) d'un support (14) d'un applicateur PLT (15),
l'applicateur PLT étant un dispositif en forme de pistolet, destiné à l'application de compositions dans le domaine dentaire.

10. Capsule de mélange (1) selon l'une des revendications 1 à 9, **caractérisée en ce qu'**une première section de tube (20) du premier boîtier (18) comprend la première chambre (2) et une deuxième section de tube (23) du deuxième boîtier (19) comprend la deuxième chambre (3), la chambre commune (7) étant formée par la première chambre (2) et la deuxième chambre (3) dans la position de manipulation (6) de la capsule de mélange (1), la première section de tube (20) et la deuxième section de tube (23) formant un tube commun.

11. Capsule de mélange (1) selon la revendication 10, **caractérisée en ce que** la première section de tube (20) présente un premier film de fermeture sur son côté tourné vers la deuxième section de tube (23) et la deuxième section de tube (23) présente un deuxième film de fermeture sur son côté tourné vers la première section de tube (20), le premier film de fermeture et le deuxième film de fermeture pouvant être détruits par la force.

12. Capsule de mélange (1) selon l'une des revendications 1 à 11, **caractérisée en ce que** la première chambre (2) présente un troisième film de fermeture (22) sur son côté opposé à la deuxième chambre (3).

13. Capsule de mélange (1) selon l'une des revendications 1 à 12, **caractérisée en ce que** la capsule de mélange comprend un polymère de cyclooléfine, des copolymères de cyclooléfine, du polyéthylène, du polypropylène, du polyéthylène basse densité, du polyéthylène haute densité, du polypropylène basse densité, du polypropylène haute densité et/ou des mélanges contenant au moins l'un des polymères mentionnés ci-dessus.

14. Procédé de mélange d'au moins deux compositions A et B en une composition C dans une capsule de mélange selon l'une des revendications 1 à 13,
le procédé comprenant les étapes suivantes :
(i) passage de la capsule de mélange d'une position de stockage (4) à une position de manipulation (6) par la rotation d'une première chambre (2) et/ou d'une deuxième chambre (3) autour d'un axe longitudinal (5) de la capsule de mélange (1) jusqu'à ce qu'une première ouverture (25) de la première chambre et une deuxième ouverture (26) de la deuxième chambre soient disposées de manière congruente l'une par rapport à l'autre ;
(ii) mélange de la composition A et de la composition B dans la chambre de mélange commune (7) par le déplacement de la capsule de mélange (1) ;
(iii) obtention de la composition C,
(iv) mise en place de la buse (10) avec section de piston (10a) avec canule (9) située au centre et moyen (1 0b) pour traverser une membrane (7a) de la chambre de mélange commune (7) sur la première géométrie de raccordement (8) de la première chambre (2), la chambre de mélange commune (7) étant ainsi réduite ;
(v) en option, encliquetage de la formation en forme de poignée encliquetable (12) de la capsule de mélange (1) dans une découpe (13) d'un support (14) d'un applicateur PLT, de sorte que l'applicateur PLT arrive dans sa position d'extraction.

15. Procédé selon la revendication 14, **caractérisé en ce que** (ii) le mélange de la composition A et de la composition B pour former la composition C dans la chambre de mélange commune (7) est effectué par un appareil de mélange universel pour matériaux dentaires.

16. Utilisation d'une capsule de mélange (1) selon la revendication 1, dans laquelle une deuxième chambre (3) peut être tournée dans une position de manipulation (6) par rotation autour d'un axe longitudinal du boîtier de capsule, la deuxième chambre formant avec une première chambre (2) une chambre de mélange commune (7) pour le stockage et le mélange d'une composition pâteuse à malaxable dans la position de manipulation.

17. Utilisation d'une capsule de mélange (1) selon la revendication 16 pour le stockage et le mélange des compositions dentaires à deux composants.

18. Kit comprenant une capsule de mélange (1) selon l'une des revendications 1 à 13 et la première chambre (2) contenant une composition A et la deuxième chambre (3) contenant une composition B
